# EUROPEAN PATENT APPLICATION

(11) **EP 4 494 965 A1**
(43) Date of publication of application: **22.01.2025**
(21) Application number: 24189045.8
(22) Date of filing: 17.07.2024
(51) Int. Cl.: B60W 50/02, B60W 50/04, G05B 23/02, G07C 5/00, G06Q 10/20

(54) **REMOTE VEHICLE MONITORING METHOD, REMOTE MONITORING PLATFORM, AND STORAGE MEDIUM**

(30) Priority: 17.07.2023 CN 202310876430
(71) Applicant: Nio Technology (Anhui) Co., Ltd, Hefei City, Anhui 230601 (CN)
(72) Inventor: WANG, Kai, Hefei City, Anhui, 230601 (CN); ZHANG, Jianbo, Hefei City, Anhui, 230601 (CN); GUO, Jiaxuan, Hefei City, Anhui, 230601 (CN); ZHOU, Yonggang, Hefei City, Anhui, 230601 (CN); GUI, Junfei, Hefei City, Anhui, 230601 (CN); LI, Meng, Hefei City, Anhui, 230601 (CN); HAN, Xinyu, Hefei City, Anhui, 230601 (CN); ZHAO, Di, Hefei City, Anhui, 230601 (CN)
(74) Representative: Vossius & Partner Patentanwälte Rechtsanwälte mbB

(57) **Abstract**

The disclosure relates to the field of intelligent driving, and particularly provides a remote vehicle monitoring method, a remote monitoring platform, and a storage medium, which are intended to solve the problem that existing remote monitoring services are unable to give an early prediction and alarm for a fault. To this end, the remote monitoring platform of the disclosure has a plurality of vehicle filtering conditions and a plurality of layers of fault determination conditions pre-stored therein. The remote vehicle monitoring method includes: obtaining entered custom filtering information; respectively determining target vehicle filtering conditions and target vehicle fault determination conditions based on the custom filtering information, where the target vehicle fault determination condition includes at least one layer of fault determination condition; determining, based on the target vehicle filtering conditions, a target vehicle to be monitored, and obtaining driving data of the target vehicle to be monitored; and determining, based on the target vehicle fault determination condition and the driving data, whether the target vehicle has a fault. With the above implementation, an early prediction and alarm for a vehicle fault may be given, such that the accuracy of fault diagnosis is improved, and the diagnostic cycle is shortened.

## Description

### TECHNICAL FIELD

The disclosure relates to the technical field of intelligent driving, and in particular, to a remote vehicle monitoring method, a remote monitoring platform, and a storage medium.

### BACKGROUND ART

When a vehicle has a fault, the vehicle is usually requested to come to a store or a trailer goes to the site for a diagnostic service, and then fault maintenance is provided. However, such on-site diagnosis and maintenance are not only demanding for technicians, but also time-consuming. Therefore, it is possible to perform fault diagnosis on the vehicle through remote monitoring.

Currently, a commonly used remote monitoring method is monitoring the reporting of a preset alarm signal by a vehicle. In this monitoring mode, only when the vehicle reports anomaly alarm information, a fault can be monitored in a background for passive diagnosis. If the fault is a sporadic fault, the diagnosis at this time often fails to determine the fault, making it impossible to give an early prediction and alarm for the fault.

Accordingly, there is a need for a new technical solution in the field to solve the problem described above.

### SUMMARY

In order to overcome the above drawbacks, the disclosure is proposed to provide a remote vehicle monitoring method, a remote monitoring platform, and a storage medium, in order to solve or at least partially solve the technical problem that existing remote monitoring services are unable to give an early prediction and alarm for a fault.

According to a first aspect, there is provided a remote vehicle monitoring method applied to a remote monitoring platform, where the remote monitoring platform has a plurality of vehicle filtering conditions and a plurality of layers of fault determination conditions pre-stored therein. The method includes:
obtaining entered custom filtering information;
respectively determining target vehicle filtering conditions and target vehicle fault determination conditions based on the custom filtering information, where the target vehicle fault determination condition includes at least one layer of fault determination condition;
determining, based on the target vehicle filtering conditions, a target vehicle to be monitored, and obtaining driving data of the target vehicle to be monitored; and
determining, based on the target vehicle fault determination condition and the driving data, whether the target vehicle has a fault.

In one technical solution of the above remote vehicle monitoring method, the custom filtering information includes custom vehicle filtering conditions and custom fault determination conditions, and the respectively determining target vehicle filtering conditions and target vehicle fault determination conditions based on the custom filtering information includes:
determining, based on the entered custom vehicle filtering conditions, the target vehicle filtering conditions from the plurality of vehicle filtering conditions pre-stored at the remote monitoring platform; and
determining, based on the entered custom fault determination conditions, at least one layer of fault determination condition from the plurality of layers of fault determination conditions pre-stored at the remote monitoring platform, and then using the determined at least one layer of fault determination condition as the target vehicle fault determination condition.

In one technical solution of the above remote vehicle monitoring method, the determining, based on the target vehicle fault determination condition and the driving data, whether the target vehicle has a fault includes:
making a determination on a single-frame signal in the driving data based on a first layer of fault determination condition, the single-frame signal including at least one of a single-frame communication signal and a single-frame alarm signal; and
selecting a corresponding operation to perform based on a determination result and a number of layers of the target vehicle fault determination condition.

In one technical solution of the above remote vehicle monitoring method, the making a determination on a single-frame signal in the driving data based on a first layer of fault determination condition includes:
determining at least one of a logical relationship, an arithmetic method, and a signal size between a plurality of single-frame signals in the driving data based on the first layer of fault determination condition.

In one technical solution of the above remote vehicle monitoring method, the selecting a corresponding operation to perform includes:
if the number of layers of the target vehicle filtering condition is 1, and the driving data satisfies the first layer of fault determination condition, preliminarily determining that the vehicle has a fault; or
if the number of layers of the target vehicle filtering condition is greater than 1, and the driving data satisfies the first layer of fault determination condition, continuing to obtain the driving data, and continuing to determine whether the target vehicle has a fault based on another layer of the target vehicle fault determination condition and the driving data,
where the other layer of the target vehicle fault determination condition is a target vehicle fault determination condition other than the first layer of fault determination condition in the plurality of layers of the target vehicle fault determination condition.

In one technical solution of the above remote vehicle monitoring method, the target vehicle fault determination condition further includes a second layer of fault determination condition; and the continuing to determine whether the target vehicle has a fault based on another layer of the target vehicle fault determination condition and the driving data includes:
making a determination on multi-frame signals in the driving data based on the second layer of fault determination condition; and
selecting a corresponding operation to perform based on a determination result and a number of layers of the target vehicle fault determination condition.

In one technical solution of the above remote vehicle monitoring method, the making a determination on multi-frame signals in the driving data based on the second layer of fault determination condition includes:
determining, based on the second layer of fault determination condition, at least one of a number of times consecutive multi-frame signals in the driving data satisfy a preset condition within a preset duration, a state in which the consecutive multi-frame signals in the driving data satisfy a preset continuous change within a preset duration, and a condition in which neighboring-frame signals in the driving data satisfy a preset change within a preset duration.

In one technical solution of the above remote vehicle monitoring method, the target vehicle fault determination condition further includes a third layer of fault determination condition, and the selecting a corresponding operation to perform based on a determination result and a number of layers of the target vehicle fault determination condition includes:
making a determination on a trouble code signal in the driving data based on the third layer of fault determination condition; and
selecting a corresponding operation to perform based on a determination result and a number of layers of the target vehicle fault determination condition.

In one technical solution of the above remote vehicle monitoring method, the determining, based on the target vehicle fault determination condition and the driving data, whether the target vehicle has a fault includes:
if it is preliminarily determined, based on the target vehicle fault determination condition and the driving data, that the target vehicle has a fault, obtaining fault information about the target vehicle;
   or
obtaining a secondary diagnosis result for the target vehicle, the secondary diagnosis result being a manual diagnosis result; and
redetermining, based on the secondary diagnosis result, whether the target vehicle has a fault.

In one technical solution of the above remote vehicle monitoring method, the method further includes:
if the secondary diagnosis result indicates that the target vehicle has no fault, obtaining a target vehicle fault determination condition modified by a user based on the secondary diagnosis result, and continuing the step of "determining, based on the target vehicle fault determination condition and the driving data, whether the target vehicle has a fault"; and
if the secondary diagnosis result indicates that the target vehicle has a fault, obtaining fault information about the target vehicle.

In one technical solution of the above remote vehicle monitoring method, the method further includes:
obtaining a maintenance plan corresponding to the fault information;
   or
sending the fault information to an emergency response platform and/or an after-sales platform and/or a remote service platform.

In one technical solution of the above remote vehicle monitoring method, the fault information about the vehicle includes at least a fault level; and the sending the fault information to an emergency response platform and/or an after-sales platform and/or a remote service platform includes:
sending the fault information to the remote service platform if the fault level indicates a mild fault;
   and/or
sending the fault information to the after-sales platform if the fault level indicates a moderate fault;
   and/or
sending the fault information to the emergency response platform if the fault level indicates a severe fault.

According to a second aspect, there is provided a remote monitoring platform including a processor and a storage apparatus adapted to store a plurality of pieces of program code, where the program code is adapted to be loaded and run by the processor to perform the remote vehicle monitoring method as described in any one of the technical solutions of the above remote vehicle monitoring method.

According to a third aspect, there is provided a computer-readable storage medium storing a plurality of pieces of program code, where the program code is adapted to be loaded and run by a processor to perform the remote vehicle monitoring method as described in any one of the technical solutions of the above remote vehicle monitoring method.

The one or more technical solutions of the disclosure described above have at least one or more of the following beneficial effects:

In implementing the technical solution of the disclosure, the remote monitoring platform has the plurality of vehicle filtering conditions and the plurality of layers of fault determination conditions pre-stored therein. First, the entered custom filtering information is obtained; the target vehicle filtering conditions and the target vehicle fault determination conditions are respectively determined based on the custom filtering information, where the target vehicle fault determination condition includes at least one layer of fault determination condition; then, the target vehicle to be monitored is determined based on the target vehicle filtering conditions, and the driving data of the target vehicle to be monitored is obtained; and finally, it is determined, based on the target vehicle fault determination condition and the driving data, whether the target vehicle has a fault. With the above implementation, the early prediction and alarm for the fault in the vehicle can be given based on remote diagnosis and big data analysis services, such that the accuracy of fault diagnosis can be improved, and the diagnosis cycle can be effectively shortened.

Further, after diagnosing that the vehicle has a fault, the remote monitoring platform may send the fault information to a corresponding platform to handle the fault in a timely manner, which improves the efficiency of fault maintenance, reduces labor costs, and enhances the usage experience of users.

### BRIEF DESCRIPTION OF THE DRAWINGS

The disclosed content of the disclosure will become more readily understood with reference to the accompanying drawings. A person skilled in the art readily understands that: These accompanying drawings are merely for illustrative purposes and are not intended to limit the protection scope of the disclosure. In the drawings:
FIG. 1 is a schematic flowchart of main steps of a remote vehicle monitoring method according to an embodiment of the disclosure;
FIG. 2 is a schematic flowchart of main steps of respectively determining target vehicle filtering conditions and target vehicle fault determination conditions based on custom filtering information according to an embodiment of the disclosure;
FIG. 3 is a schematic flowchart of main steps of determining, based on a target vehicle fault determination condition and driving data, whether a target vehicle has a fault according to an embodiment of the disclosure;
FIG. 4 is a schematic flowchart of main steps of continuing to determine whether a target vehicle has a fault based on another layer of the target vehicle fault determination condition and driving data according to an embodiment of the disclosure;
FIG. 5 is a schematic flowchart of main steps of selecting a corresponding operation to perform based on a determination result and a number of layers of the target vehicle fault determination condition according to an embodiment of the disclosure;
FIG. 6 is a schematic diagram of a main flow of a remote vehicle monitoring method according to an embodiment of the disclosure; and
FIG. 7 is a schematic diagram of a main structure of a remote monitoring platform according to an embodiment of the disclosure.

### List of reference signs:

701: Processor; 702: Storage apparatus.

### DETAILED DESCRIPTION OF EMBODIMENTS

Some implementations of the disclosure are described below with reference to the accompanying drawings. Those skilled in the art should understand that these implementations are merely used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

As described in the Background Art, currently, a commonly used remote monitoring method is monitoring the reporting of a preset alarm signal by a vehicle. In this monitoring mode, only when the vehicle reports anomaly alarm information, a fault can be monitored in a background for passive diagnosis. If the fault is a sporadic fault, the diagnosis at this time often fails to determine the fault, making it impossible to give an early prediction and alarm for the fault.

In order to solve the above problem, the disclosure provides a remote vehicle monitoring method, a remote monitoring platform, and a storage medium.

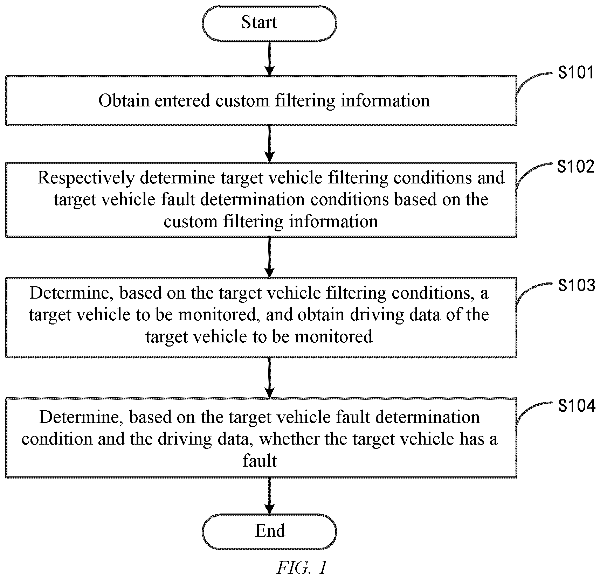

Referring to FIG. 1, FIG. 1 is a schematic flowchart of main steps of a remote vehicle monitoring method according to an embodiment of the disclosure. The remote vehicle monitoring method in this embodiment of the disclosure is applied to a remote monitoring platform, where the remote monitoring platform has a plurality of vehicle filtering conditions and a plurality of layers of fault determination conditions pre-stored therein.

As shown in FIG. 1, the remote vehicle monitoring method in this embodiment of the disclosure mainly includes the following steps S101 to S 104.

Step S101: Obtain entered custom filtering information.

Step S102: Respectively determine target vehicle filtering conditions and target vehicle fault determination conditions based on the custom filtering information.

The target vehicle fault determination condition includes at least one layer of fault determination condition.

Step S103: Determine, based on the target vehicle filtering conditions, a target vehicle to be monitored, and obtain driving data of the target vehicle to be monitored.

Step S 104: Determine, based on the target vehicle fault determination condition and the driving data, whether the target vehicle has a fault.

Based on the above steps S101 to S104, the early prediction and alarm for the fault in the vehicle can be given based on remote diagnosis and big data analysis services, such that the accuracy of fault diagnosis can be improved, and the diagnosis cycle can be effectively shortened.

The above steps S 101 to S 104 are further described below.

The remote monitoring platform in this embodiment of the disclosure has the plurality of vehicle filtering conditions and the plurality of layers of fault determination conditions pre-stored therein.

In some implementations, the plurality of vehicle filtering conditions may include vehicle model, vehicle type, vehicle status, vehicle scenario, vehicle version, activation condition, platform, date of manufacture, accumulated mileage, etc.

The vehicle status may include In Driving, Driver in Place, Parked, Upgrading, Anomaly, etc.

The vehicle scenario may include Normal, In Maintenance, FOTA (Firmware Over-The-Air) Upgrading, OBD (On-Board Diagnostics) Diagnosing, etc.

FOTA is a firmware system that allows the vehicle to be updated over a network, including, but not limited to, a control system that controls an engine, a motor, a gearbox, a chassis suspension, and other core components and parts. OBD is an automatic on-board diagnostic system.

The activation condition may include Non-activated and Activated.

The platform may represent various vehicle system platforms.

In some implementations, the plurality of layers of fault determination conditions may include a first layer of fault determination condition, a second layer of fault determination condition, and a third layer of fault determination condition.

Under the first layer of fault determination condition, a determination may be made on the single-frame signal in the driving data.

Under the second layer of fault determination condition, a determination may be made on the multi-frame signals in the driving data.

Under the third layer of fault determination condition, a determination may be made on the trouble code signal in the driving data.

In some other implementations, the remote monitoring platform may also create a listening configuration, including a configuration name, a configuration description, a business name, a fault classification, a fault domain, etc.

The configuration name and the configuration description, such as a motor fault or a battery fault, may be customized by personnel of the platform.

The business name may indicate a department that uses the remote monitoring platform, such as a service operation department or a battery operation department.

The fault classification may include a mild fault, a moderate fault, a severe fault, etc.

The fault domain may include chassis, batteries, motors, electronics, air conditioners, body and exterior, high-voltage components, smart driving, smart hardware, etc.

It should be noted that the above examples of the plurality of vehicle filtering conditions and the plurality of layers of fault determination conditions pre-stored at the remote monitoring platform, as well as the creation of the listening configuration are merely schematically illustrative. In practical applications, those skilled in the art may make settings according to specific scenarios, which is not limited here.

Further, in some implementations of the above step S101, the custom filtering information includes custom vehicle filtering conditions and custom fault determination conditions.

In practical applications, the personnel of the remote monitoring platform may configure the custom vehicle filtering conditions and the custom fault determination conditions based on the pre-stored plurality of vehicle filtering conditions and plurality of layers of fault determination conditions.

Once configured, the remote monitoring platform may obtain user-configured and entered custom vehicle filtering conditions and custom fault determination conditions.

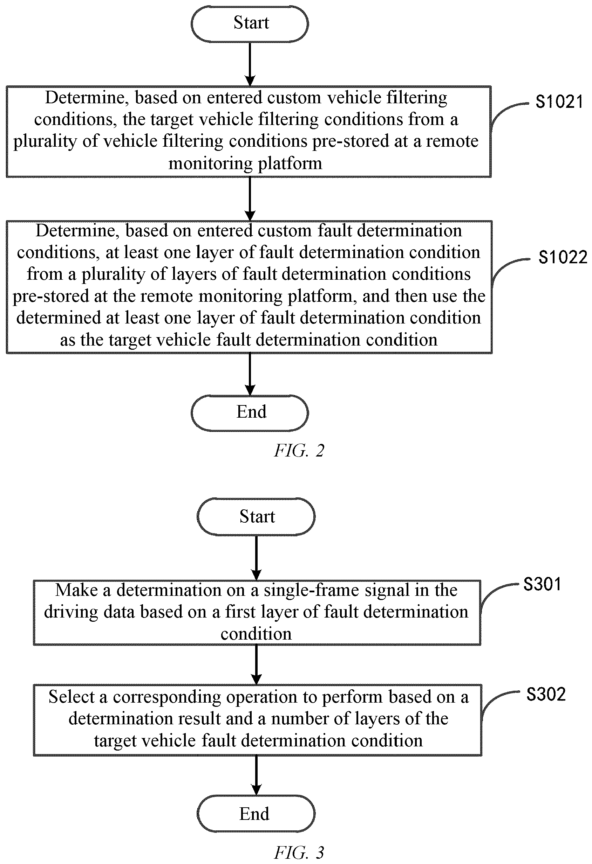

In some implementations of the above step S102, referring to FIG. 2, FIG. 2 is a schematic flowchart of main steps of respectively determining target vehicle filtering conditions and target vehicle fault determination conditions based on custom filtering information according to an embodiment of the disclosure. As shown in FIG. 2, step S 102 mainly includes the following steps S 1021 and S 1022.

Step S 1021: Determine, based on the entered custom vehicle filtering conditions, the target vehicle filtering conditions from the plurality of vehicle filtering conditions pre-stored at the remote monitoring platform.

For example, if the entered custom vehicle filtering conditions are model a, vehicle status as Driving, vehicle scenario as Normal, vehicle version as 1, and activation condition as Activated, the target vehicle filtering conditions that are model a, vehicle status as Driving, vehicle scenario as Normal, vehicle version as 1, and activation condition as Activated are determined from the plurality of vehicle filtering conditions pre-stored at the remote monitoring platform.

Step S1022: Determine, based on the entered custom fault determination conditions, at least one layer of fault determination condition from the plurality of layers of fault determination conditions pre-stored at the remote monitoring platform, and then use the determined at least one layer of fault determination condition as the target vehicle fault determination condition.

For example, if the entered custom fault determination condition is a first layer of fault determination condition for making a determination on the single-frame signal in the driving data, a first layer of fault determination condition for making a determination on the single-frame signal in the driving data is determined from the plurality of layers of fault determination conditions pre-stored at the remote monitoring platform, and is then used as the target vehicle fault determination condition.

If the entered custom fault determination conditions are a first layer of fault determination condition for making a determination on the single-frame signal in the driving data and a second layer of fault determination condition for making a determination on the multi-frame signals in the driving data, a first layer of fault determination condition for making a determination on the single-frame signal in the driving data and a second layer of fault determination condition for making a determination on the multi-frame signals of the driving data are determined from the plurality of layers of fault determination conditions pre-stored at the remote monitoring platform, and are then used as the target vehicle fault determination condition.

Step S102 is further described above, and step S 103 is further described below.

In some implementations of the above step S103, after the target vehicle filtering conditions and the target vehicle fault determination conditions are determined, the target vehicle to be monitored is filtered based on the target vehicle filtering conditions, and the driving data of the target vehicle to be monitored is obtained.

The driving data of the target vehicle includes a CAN signal, a WTI signal, a DTC signal of the vehicle, etc. The CAN signal represents a communication signal within a vehicle controller area network, the WTI signal represents the vehicle's alarm signal, and the DTC signal represents a diagnostic trouble code signal.

Further, the remote monitoring platform may obtain the driving data through a telematics data transmission module (T-BOX) of the target vehicle.

Step S103 is further described above, and step S 104 is further described below.

In some implementations of the above step S104, referring to FIG. 3, FIG. 3 is a schematic flowchart of main steps of determining, based on a target vehicle fault determination condition and driving data, whether a target vehicle has a fault according to an embodiment of the disclosure. As shown in FIG. 3, step S 103 mainly includes the following steps S301 and S302.

Step S301: Make a determination on a single-frame signal in the driving data based on a first layer of fault determination condition.

The single-frame signal includes at least one of a single-frame CAN signal and a single-frame WTI signal.

Specifically, at least one of a logical relationship, an arithmetic method, and a signal size between a plurality of single-frame signals in the driving data may be determined based on the first layer of fault determination condition.

In some implementations, at least one of a logical relationship, an arithmetic method, and a signal size between a plurality of single-frame CAN signals in the driving data may be determined based on the first layer of fault determination condition. The plurality of single-frame CAN signals include a motor rotation speed, a front left wheel speed, a front right wheel speed, a front motor voltage, a battery relay switch status, a vehicle status, etc.

For example, the arithmetic method and signal size between the plurality of single-frame CAN signals are determined based on the following first layer of fault determination condition:
1. motor rotation speed > front left wheel speed × 38 + front right wheel speed × 38 + 2000;
2. front motor voltage > 300;
3. battery relay switch status = 3; and
4. vehicle status ≠ 3.

In the first layer of fault determination condition, the logical relationship between the above four conditions is "AND". "3" in the above "battery relay switch status = 3" represents Closed, i.e., the battery relay switch is closed. "3" in "vehicle status ≠ 3" represents Parked, i.e., the vehicle is not parked.

Further, When the driving data of the target vehicle satisfies the above four conditions, the first layer of fault determination condition is satisfied.

In some implementations, a determination may be made on a WTI signal in the driving data based on the first layer of fault determination condition. When a selected WTI signal occurs in the driving data of the target vehicle, the first layer of fault determination condition is satisfied.

In some implementations, a determination may be made on both the single-frame CAN signal and the single-frame WTI signal based on the first layer of fault determination condition. When the single-frame CAN signal and the single-frame WTI signal are satisfied for the driving data of the target vehicle, the first layer of fault determination condition is satisfied.

Step S302: Select a corresponding operation to perform based on a determination result and a number of layers of the target vehicle fault determination condition.

In some implementations, if the number of layers of the target vehicle fault determination condition is 1, and the driving data satisfies the first layer of fault determination condition, it is preliminarily determined that the target vehicle has a fault.

When the driving data satisfies the target vehicle fault determination condition, indicating that the vehicle is at risk of being faulty, it is preliminarily determined that the vehicle has a fault.

In some implementations, if the number of layers of the target vehicle filtering condition is greater than 1, and the driving data satisfies the first layer of fault determination condition, the driving data continues to be obtained, and whether the target vehicle has a fault continues to be determined based on another layer of the target vehicle fault determination condition and the driving data.

The other layer of the target vehicle fault determination condition is a target vehicle fault determination condition other than the first layer of fault determination condition in the plurality of layers of the target vehicle fault determination condition.

Further, in some implementations, the plurality of layers of the target vehicle fault determination condition may also include a second layer of fault determination condition.

When two layers of fault determination conditions are configured, if the driving data meets the first layer of fault determination condition, the driving data continues to be obtained, and whether the target vehicle has a fault continues to be determined based on the second layer of the target vehicle fault determination condition and the driving data.

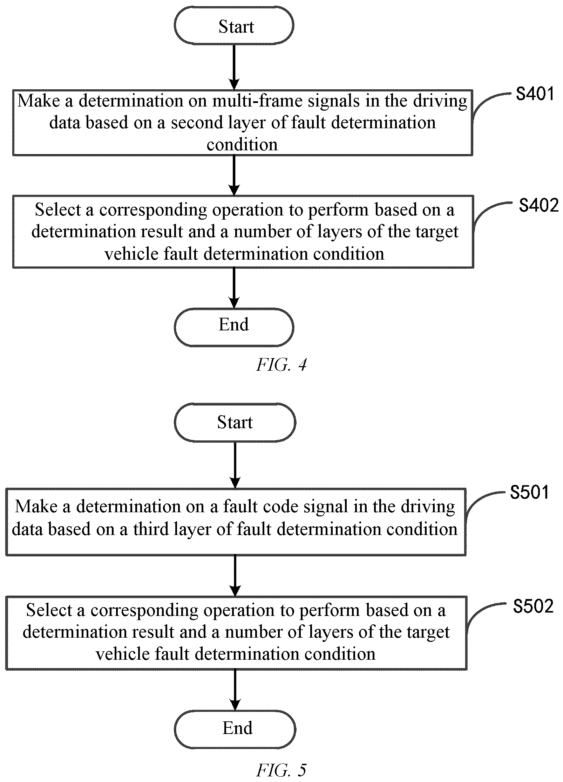

Referring to FIG. 4, FIG. 4 is a schematic flowchart of main steps of continuing to determine whether a target vehicle has a fault based on another layer of the target vehicle fault determination condition and driving data according to an embodiment of the disclosure. As shown in FIG. 4, step S302 mainly includes the following steps S401 and S402.

Step S401: Make a determination on multi-frame signals in the driving data based on the second layer of fault determination condition.

Specifically, based on the second layer of fault determination condition, at least one of a number of times consecutive multi-frame signals in the driving data satisfy a preset condition within a preset duration, a state in which the consecutive multi-frame signals in the driving data satisfy a preset continuous change within a preset duration, and a condition in which neighboring-frame signals in the driving data satisfy a preset change within a preset duration may be determined.

The number of times consecutive multi-frame signals in the driving data satisfy a preset condition within a preset duration may include:
1. count class, i.e., the number of times the consecutive multi-frame signals satisfy the preset condition within the preset duration.

The state in which the consecutive multi-frame signals in the driving data satisfy a preset continuous change within a preset duration may include:
1. continuously satisfying within a specified period of time, i.e., the consecutive multi-frame signals continuously satisfy the preset condition within the preset duration, where the preset duration is customizable;
2. continuously unchanged within a specified period of time, i.e., the consecutive multi-frame signals are continuously unchanged within the preset duration, where the preset duration is customizable;
3. continuously rising within a specified period of time, i.e., the consecutive multi-frame signals are continuously rising within the preset duration, where the preset duration is customizable; and
4. continuously decreasing within a specified period of time, i.e., the consecutive multi-frame signals are continuously decreasing within the preset duration, where the preset duration is customizable.

The condition in which neighboring-frame signals in the driving data satisfy a preset change within a preset duration may include:
1. a sudden increase in data of two adjacent frames, i.e., there is a sudden increase in data of two adjacent frames of signals among the consecutive multi-frame signals within the preset duration, where the threshold of the increase is customizable; and
2. a sudden decrease in data of two adjacent frames, i.e., there is a sudden decrease in data of two adjacent frames of signals among the consecutive multi-frame signals within the preset duration, where the threshold of the decrease is customizable.

In practical applications, the second layer of fault determination condition may include all or some of the above conditions. For example, the second layer of fault determination condition may include continuously satisfying within a specified period of time, continuously unchanged within a specified period of time, continuously rising within a specified period of time, continuously decreasing within a specified period of time, the sudden increase in data of two adjacent frames, and the sudden decrease in data of two adjacent frames. The logical relationship between the above six conditions may be "AND", and the preset duration may be customized to 10s, etc., which are not limited here.

Further, when the driving data of the target vehicle satisfies the second layer of fault determination condition, it is preliminarily determined that the vehicle has a fault.

When the driving data satisfies the target vehicle fault determination condition, indicating that the vehicle is at risk of being faulty, it is preliminarily determined that the vehicle has a fault.

Step S402: Select a corresponding operation to perform based on a determination result and a number of layers of the target vehicle fault determination condition.

In some implementations, the plurality of layers of the target vehicle fault determination condition may further include a third layer of fault determination condition.

When three layers of fault determination conditions are configured, if the driving data satisfies the first layer of fault determination condition, the driving data continues to be obtained, and a determination is made on the driving data based on the second layer of fault determination condition. If the driving data satisfies the second layer of fault determination condition, the driving data continues to be obtained, and it is determined, based on the third layer of fault determination condition, whether the vehicle has a fault.

Referring to FIG. 5, FIG. 5 is a schematic flowchart of main steps of selecting a corresponding operation to perform based on a determination result and a number of layers of the target vehicle fault determination condition according to an embodiment of the disclosure. As shown in FIG. 5, step S402 mainly includes the following steps S501 and S502.

Step S501: Make a determination on a trouble code signal in the driving data based on the third layer of fault determination condition.

In some implementations, when the target vehicle fault determination condition includes the third layer of fault determination condition, and the driving data of the target vehicle satisfies the first layer of fault determination condition and the second layer of fault determination condition, the remote monitoring platform will issue a command to the target vehicle to enable the vehicle to transmit the DTC signal back, and then make a determination on the DTC signal based on the third layer of fault determination condition.

Under the third layer of fault determination condition, the DTC signal may be selected to be automatically issued, and an issuance interval may be set, such as 23h. The type of determination between DTC signals may also be set, and data of the DTC signals to be subjected to determination is entered.

For example, when trouble code code000001 occurs in the DTC signal of the motor, it may indicate that the motor rotation speed is too high or inconsistent with a preset rotation speed, etc.

Further, when the above trouble code occurs in the target vehicle, the third layer of fault determination condition is satisfied.

It should be noted that the above examples of the target fault determination condition are merely schematically illustrative. In practical applications, those skilled in the art can use an open framework of a remote monitoring platform to formulate signal logic for various types of driving data of a vehicle, so as to configure the plurality of layers of fault determination conditions. The first layer of fault determination condition is a condition that must be configured. The second layer of fault determination condition and the third layer of fault determination condition may be optionally configured, which is not limited here.

Step S502: Select a corresponding operation to perform based on a determination result and a number of layers of the target vehicle fault determination condition.

Specifically, when the driving data of the target vehicle satisfies the third layer of fault determination condition, it is preliminarily determined that the target vehicle has a fault.

When the driving data satisfies the target vehicle fault determination condition, indicating that the vehicle is at risk of being faulty, it is preliminarily determined that the vehicle has a fault.

Further, in some implementations, if it is preliminarily determined, based on the target vehicle fault determination condition and the driving data, that the target vehicle has a fault, fault information about the target vehicle is obtained.

The fault information about the vehicle includes at least a fault level. The fault level is entered into the remote monitoring platform before the fault determination conditions are configured. The fault level is related to a component in which a fault occurs. For example, a fault related to a door handle, a wiper motor, etc. is a mild fault, a fault related to power-assisted steering, an air conditioner compressor, etc. is a moderate fault, and a fault related to a motor or a battery is a severe fault.

In some implementations, if it is preliminarily determined, based on the target vehicle fault determination condition and the driving data, that the target vehicle has a fault, a secondary diagnosis result for the target vehicle is obtained.

The secondary diagnosis result is a manual diagnosis result.

When it is preliminarily determined that the vehicle has a fault, the remote monitoring platform will generate an alarm notification for the vehicle fault, and send the alarm notification to relevant personnel, and the relevant personnel will make a request for the vehicle to come to a store for inspection, and conduct secondary diagnosis on the vehicle.

The alarm notification can be configured, for example, by selecting whether to set a notification list, selecting a notification type and a notifier, setting a notification frequency, selecting whether to enable a notification, etc., which is no limited here.

Further, it may be redetermined, based on the secondary diagnosis result, whether the target vehicle has a fault.

In some implementations, if the secondary diagnosis result indicates that the target vehicle has no fault, a target vehicle fault determination condition modified by a user based on the secondary diagnosis result is obtained, and the step of "determining, based on the target vehicle fault determination condition and the driving data, whether the target vehicle has a fault" is continued.

Specifically, if the personnel finds that the target vehicle does not have the fault monitored by the remote monitoring platform, they may feed the vehicle condition back to the personnel of the remote monitoring platform, and the personnel may modify the target vehicle fault determination condition based on the analysis of the driving data, and resume remote monitoring of the target vehicle.

For example, when the number of layers of the target vehicle fault determination condition is 1, the first layer of fault determination condition may be modified, or the second layer of fault determination condition and the third layer of fault determination condition may be added. When the number of layers of the target vehicle fault determination condition is 2, the first layer of fault determination condition and/or the second layer of fault determination condition may be modified, or the third layer of fault determination condition may be added. When the number of layers of the target vehicle fault determination condition is 3, the first layer of fault determination condition and/or the second layer of fault determination condition and/or the third layer of fault determination condition may be modified. This is not limited here.

In some implementations, if the secondary diagnosis result indicates that the target vehicle has a fault, fault information about the target vehicle is obtained.

Further, in some implementations, after it is preliminarily determined that the target vehicle has a fault or the secondary diagnosis result indicates that the target vehicle has a fault, and the fault information about the target vehicle is obtained, a maintenance plan corresponding to the fault information may further be obtained.

Specifically, the remote monitoring platform may obtain and output the maintenance plan corresponding to the fault information, for example, the maintenance plan may be displayed at the remote monitoring platform, which may improve the efficiency of maintenance by the personnel; and the maintenance plan is sent to the vehicle, which helps the user to understand a maintenance method.

In some other implementations, after it is preliminarily determined that the target vehicle has a fault or the secondary diagnosis result indicates that the target vehicle has a fault, and the fault information about the target vehicle is obtained, the fault information may further be sent to an emergency response platform and/or an after-sales platform and/or a remote service platform.

The remote monitoring platform may communicate with the emergency response platform, the after-sales platform, and the remote service platform.

The remote service platform may receive the fault information sent by the remote monitoring platform and/or the vehicle, and clear the vehicle fault.

The after-sales platform may receive the fault information sent by the remote monitoring platform, and synchronize a fault maintenance plan for the vehicle.

The emergency response platform may receive the fault information sent by the remote monitoring platform, and provide emergency treatment for the vehicle.

Further, the remote monitoring platform may always keep communication with the emergency response platform, the after-sales platform, and the remote service platform, and send the fault information about the vehicle to the corresponding platform after obtaining the fault information. The remote monitoring platform may also establish communication with the emergency response platform, the after-sales platform, and the remote service platform after obtaining the fault information about the vehicle, and send the fault information to the corresponding platform. This is not limited here.

The fault information about the vehicle includes at least a fault level. The fault level is entered into the remote monitoring platform before the fault determination conditions are configured. The fault level is related to a component in which a fault occurs. For example, a fault related to a door handle, a wiper motor, etc. is a mild fault, a fault related to power-assisted steering, an air conditioner compressor, etc. is a moderate fault, and a fault related to a motor or a battery is a severe fault.

Further, in some implementations, the fault information is sent to the remote service platform if the fault level indicates a mild fault.

In the case of the mild fault in the vehicle, the remote monitoring platform may send the fault information to the remote service platform, which receives the fault information and then establishes a connection with the vehicle, to clear the vehicle fault. Alternatively, the remote monitoring platform may establish a communication connection between the remote service platform and the vehicle, such that the vehicle sends the fault information to the remote service platform, and the remote service platform clears the vehicle fault.

Further, after receiving the fault information and communicating with the vehicle, the remote service platform may generate a remote work order, such that a technician and/or a maintenance machine may connect the vehicle to provide a remote service, thereby clearing the vehicle fault.

In some implementations, the fault information is sent to the after-sales platform if the fault level indicates a moderate fault.

In the case of the moderate fault in the vehicle, indicating that the vehicle needs to be repaired, has parts to be replaced in the store, etc., the remote monitoring platform sends the fault information to the after-sales platform, and the after-sales platform receives the fault information and then generates a work order to display the specific fault, and synchronizes a maintenance plan when the vehicle enters the store.

In some implementations, the fault information is sent to the emergency response platform if the fault level indicates a severe fault.

In the case of the severe fault in the vehicle, the remote monitoring platform sends the fault information to the emergency response platform, which receives the fault information and then may implement one-click pull-through of parties related to the fault, to provide emergency treatment for the vehicle, such as by synchronously sending the fault information and a maintenance plan to a user, a city end, maintenance personnel, etc. The maintenance personnel receives the fault information and then may arrange a trailer for the user's vehicle in a timely manner, to provide on-site maintenance for the user.

In some implementations, if the fault information about the vehicle includes a plurality of levels of fault, the remote monitoring platform may send the fault information to a plurality of corresponding platforms, so that the plurality of platforms collectively provide treatment for the vehicle fault.

For example, if the fault level in the fault information includes the mild fault and the moderate fault, the remote monitoring platform may send the fault information to the emergency response platform and the after-sales platform, such that the emergency response platform establishes a connection with the vehicle to clear the vehicle fault, and the after-sales platform synchronizes the fault maintenance plan for the vehicle.

Step S 104 is further described above.

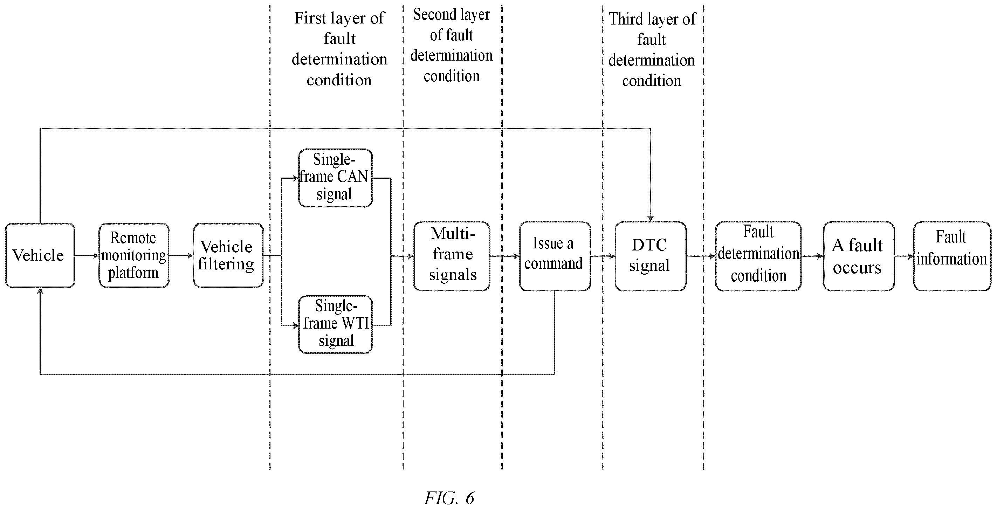

In some implementations, referring to FIG. 6, FIG. 6 is a schematic diagram of a main flow of a remote vehicle monitoring method according to an embodiment of the disclosure, which method is applied to a remote monitoring platform.

As shown in FIG. 6, the following processes may be included:
obtaining entered custom filtering information, including custom vehicle filtering conditions and custom fault determination conditions;
respectively determining target vehicle filtering conditions and target vehicle fault determination conditions based on the custom filtering information;
determining, based on the target vehicle filtering conditions, a target vehicle to be monitored;
obtaining driving data uploaded by the target vehicle to be monitored based on T-BOX;
determining, based on the target vehicle fault determination condition, whether the driving data satisfies a first layer of fault determination condition, where the first layer of fault determination condition is used to make a determination on a single-frame CAN signal and/or a single-frame WTI signal in the driving data;
determining, based on the target vehicle fault determination condition, whether the driving data satisfies a second layer of fault determination condition, where the second layer of fault determination condition is used to make a determination on multi-frame signals in the driving data;
issuing a command to the vehicle to enable the vehicle to transmit a DTC signal back;
determining, based on the target vehicle fault determination condition, whether the driving data satisfies a third layer of fault determination condition, where the third layer of fault determination condition is used to make a determination on the DTC signal in the driving data;
when the driving data satisfies the target vehicle fault determination condition, preliminarily determining that the target vehicle has a fault; and
obtaining fault information about the target vehicle.

The remote vehicle monitoring method is further described above.

With the above method, the speed of responding to the vehicle fault can be greatly increased, the information transmission barrier can be broken, and the fault can be handled in a timely manner, thereby shortening the maintenance time, reducing labor costs, and improving the usage experience of users.

It should be noted that, although the steps are described in a particular sequence in the above embodiments, a person skilled in the art may understand that, to implement the effects of the disclosure, different steps are not necessarily performed in such a sequence, and the steps may be performed simultaneously (in parallel) or in another sequence. These changes fall within the protection scope of the disclosure.

A person skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like.

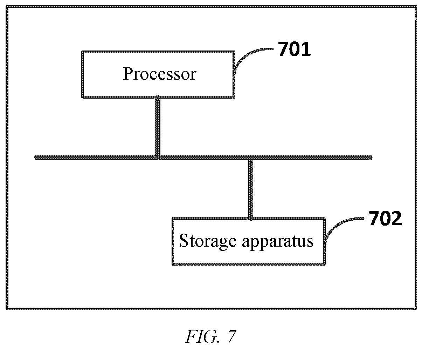

Further, the disclosure also provides a remote monitoring platform. Referring to FIG. 7, FIG. 7 is a schematic diagram of a main structure of a remote monitoring platform according to an embodiment of the disclosure. As shown in FIG. 7, the remote monitoring platform in this embodiment of the disclosure mainly includes a processor 701 and a storage apparatus 702. The storage apparatus 702 may be configured to store a program for performing the remote vehicle monitoring method in the above method embodiments. The processor 701 may be configured to execute the program in the storage apparatus 702, where the program includes, but is not limited to, a program for performing the remote vehicle monitoring method in the above method embodiments. For ease of description, only parts related to the embodiments of the disclosure are shown. For specific technical details that are not disclosed, refer to the method part of the embodiments of the disclosure.

In some possible implementations of the disclosure, the remote monitoring platform may include a plurality of processors 701 and a plurality of storage apparatuses 702. The program for performing the remote vehicle monitoring method in the above method embodiments may be divided into a plurality of subprograms, and each subprogram may be loaded and executed by the processor 701 to perform different steps of the remote vehicle monitoring method in the above method embodiments. Specifically, each subprogram may be stored separately in a different storage apparatus 702, and each processor 701 may be configured to execute a program in one or more storage apparatuses 702 to jointly implement the remote vehicle monitoring method in the above method embodiments, that is to say, each processor 701 separately performs different steps of the remote vehicle monitoring method in the above method embodiments to jointly implement the remote vehicle monitoring method in the above method embodiments.

The plurality of processors 701 may be processors deployed on a same device. For example, the above remote monitoring platform may be a high-performance device composed of a plurality of processors. The plurality of processors 701 may be processors configured on the high-performance device. In addition, the plurality of processors 701 may alternatively be processors deployed on different devices. For example, the above remote monitoring platform may be a server cluster, and the plurality of processors 701 may be processors on different servers in the server cluster. The remote monitoring platform may be a vehicle cluster, and the plurality of processors 701 may be processors on different vehicles in a driving device cluster.

Further, the disclosure further provides a computer-readable storage medium. In an embodiment of the computer-readable storage medium according to the disclosure, the computer-readable storage medium may be configured to store a program for performing the remote vehicle monitoring method in the above method embodiments, and the program may be loaded and run by a processor to implement the above remote vehicle monitoring method. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

It should be noted that the related user personal information that may be involved in the embodiments of the disclosure is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed by the applicant may vary according to a specific product/service scenario, depends on the specific scenario in which the user uses the product/service, and may involve account information, device information, driving information, vehicle information, or other related information of the user. The applicant treats and handles the user personal information with a high degree of diligence.

The applicant attaches great importance to the security of the user personal information and has taken appropriate and feasible security measures in line with industry standards to protect the user information and prevent unauthorized access, public disclosure, use, modification, damage or loss of the personal information.

Heretofore, the technical solutions of the disclosure have been described with reference to an implementation shown in the accompanying drawings. However, it would have been readily understood by those skilled in the art that the scope of protection of the disclosure is obviously not limited to these specific implementations. Without departing from the principles of the disclosure, a person skilled in the art may make equivalent changes or replacements to related technical features. The technical solutions obtained after these changes or replacements fall within the protection scope of the disclosure.

## Claims

1. A remote vehicle monitoring method applied to a remote monitoring platform, wherein the remote monitoring platform has a plurality of vehicle filtering conditions and a plurality of layers of fault determination conditions pre-stored therein, the method comprising:
obtaining entered custom filtering information;
respectively determining target vehicle filtering conditions and target vehicle fault determination conditions based on the custom filtering information, wherein the target vehicle fault determination condition comprises at least one layer of fault determination condition;
determining, based on the target vehicle filtering conditions, a target vehicle to be monitored, and obtaining driving data of the target vehicle to be monitored; and
determining, based on the target vehicle fault determination condition and the driving data, whether the target vehicle has a fault.

2. The remote vehicle monitoring method according to claim 1, wherein the custom filtering information comprises custom vehicle filtering conditions and custom fault determination conditions, and the respectively determining target vehicle filtering conditions and target vehicle fault determination conditions based on the custom filtering information comprises:
determining, based on the entered custom vehicle filtering conditions, the target vehicle filtering conditions from the plurality of vehicle filtering conditions pre-stored at the remote monitoring platform; and
determining, based on the entered custom fault determination conditions, at least one layer of fault determination condition from the plurality of layers of fault determination conditions pre-stored at the remote monitoring platform, and then using the determined at least one layer of fault determination condition as the target vehicle fault determination condition.

3. The remote vehicle monitoring method according to claim 1 or 2, wherein the determining, based on the target vehicle fault determination condition and the driving data, whether the target vehicle has a fault comprises:
making a determination on a single-frame signal in the driving data based on a first layer of fault determination condition, the single-frame signal comprising at least one of a single-frame communication signal and a single-frame alarm signal; and
selecting a corresponding operation to perform based on a determination result and a number of layers of the target vehicle fault determination condition.

4. The remote vehicle monitoring method according to claim 3, wherein the making a determination on a single-frame signal in the driving data based on a first layer of fault determination condition comprises:
determining at least one of a logical relationship, an arithmetic method, and a signal size between a plurality of single-frame signals in the driving data based on the first layer of fault determination condition.

5. The remote vehicle monitoring method according to claim 3 or 4, wherein the selecting a corresponding operation to perform comprises:
if the number of layers of the target vehicle fault determination condition is 1, and the driving data satisfies the first layer of fault determination condition, preliminarily determining that the target vehicle has a fault; or
if the number of layers of the target vehicle fault determination condition is greater than 1, and the driving data satisfies the first layer of fault determination condition, continuing to obtain the driving data, and continuing to determine whether the target vehicle has a fault based on another layer of the target vehicle fault determination condition and the driving data,
wherein the other layer of the target vehicle fault determination condition is a target vehicle fault determination condition other than the first layer of fault determination condition in the plurality of layers of the target vehicle fault determination condition.

6. The remote vehicle monitoring method according to claim 5, wherein the target vehicle fault determination condition further comprises a second layer of fault determination condition; and the continuing to determine whether the target vehicle has a fault based on another layer of the target vehicle fault determination condition and the driving data comprises:
making a determination on multi-frame signals in the driving data based on the second layer of fault determination condition; and
selecting a corresponding operation to perform based on a determination result and a number of layers of the target vehicle fault determination condition.

7. The remote vehicle monitoring method according to claim 6, wherein the making a determination on multi-frame signals in the driving data based on the second layer of fault determination condition comprises:
determining, based on the second layer of fault determination condition, at least one of a number of times consecutive multi-frame signals in the driving data satisfy a preset condition within a preset duration, a state in which the consecutive multi-frame signals in the driving data satisfy a preset continuous change within a preset duration, and a condition in which neighboring-frame signals in the driving data satisfy a preset change within a preset duration.

8. The remote vehicle monitoring method according to claim 6 or 7, wherein the target vehicle fault determination condition further comprises a third layer of fault determination condition, and the selecting a corresponding operation to perform based on a determination result and a number of layers of the target vehicle fault determination condition comprises:
making a determination on a trouble code signal in the driving data based on the third layer of fault determination condition; and
selecting a corresponding operation to perform based on a determination result and a number of layers of the target vehicle fault determination condition.

9. The remote vehicle monitoring method according to any one of claims 1 to 8, wherein the determining, based on the target vehicle fault determination condition and the driving data, whether the target vehicle has a fault comprises:
if it is preliminarily determined, based on the target vehicle fault determination condition and the driving data, that the target vehicle has a fault, obtaining fault information about the target vehicle;
or
obtaining a secondary diagnosis result for the target vehicle, the secondary diagnosis result being a manual diagnosis result; and
redetermining, based on the secondary diagnosis result, whether the target vehicle has a fault.

10. The remote vehicle monitoring method according to claim 9, wherein the method further comprises:
if the secondary diagnosis result indicates that the target vehicle has no fault, obtaining a target vehicle fault determination condition modified by a user based on the secondary diagnosis result, and continuing the step of "determining, based on the target vehicle fault determination condition and the driving data, whether the target vehicle has a fault"; and
if the secondary diagnosis result indicates that the target vehicle has a fault, obtaining fault information about the target vehicle.

11. The remote vehicle monitoring method according to claim 9 or 10, wherein the method further comprises:
obtaining a maintenance plan corresponding to the fault information;
or
sending the fault information to an emergency response platform and/or an after-sales platform and/or a remote service platform.

12. The remote vehicle monitoring method according to claim 11, wherein the fault information about the vehicle comprises at least a fault level; and the sending the fault information to an emergency response platform and/or an after-sales platform and/or a remote service platform comprises:
sending the fault information to the remote service platform if the fault level indicates a mild fault;
and/or
sending the fault information to the after-sales platform if the fault level indicates a moderate fault;
and/or
sending the fault information to the emergency response platform if the fault level indicates a severe fault.

13. A remote monitoring platform, comprising a processor and a storage apparatus adapted to store a plurality of pieces of program code, wherein the program code is adapted to be loaded and run by the processor to perform the remote vehicle monitoring method according to any one of claims 1 to 12.

14. A computer-readable storage medium, storing a plurality of pieces of program code, wherein the program code is adapted to be loaded and run by a processor to perform the remote vehicle monitoring method according to any one of claims 1 to 12.
